# EUROPÄISCHE PATENTANMELDUNG

(11) **EP 2 116 581 A1**
(43) Veröffentlichungstag der Anmeldung: **11.11.2009**
(21) Anmeldenummer: 09158456.5
(22) Anmeldetag: 22.04.2009
(51) Int. Cl.: C09J 7/04, B65H 19/10

(54) **Verwendung einer Fixierhilfe**

(30) Priorität: 09.05.2008 DE 102008023020
(71) Anmelder: TESA SE, 20253 Hamburg (DE)
(72) Erfinder: Harder, Dr. Christian, 22589, Hamburg (DE); Bir, Gerhard Dr., 22117, Hamburg (DE); Müller, Annemarie, 22459, Hamburg (DE)

(57) **Zusammenfassung**

Die Erfindung betrifft eine Kaschiermasse zur Herstellung eines Klebebandes mit einem flächigen Träger, umfassend zumindest eine Polysaccharidkomponente und eine Tensidkomponente.

## Beschreibung

Die Erfindung betrifft die Verwendung spezieller Haftklebebänder für den fliegenden Rollenwechsel, wie er z.B. in Papierveredelungsmaschinen oder Druckmaschinen mit Papierbahnen oder dergleichen durchgeführt wird.

Dieses Verfahren ermöglicht beim Ballenwechsel ein Splicen ohne Abstoppen der Maschine. Dabei wird, vereinfacht beschrieben, der neu einzuziehende Ballen an seinem Bahnanfang mit einer haftklebenden Fläche ausgerüstet, die, nach der Beschleunigung des Ballens auf die Bahngeschwindigkeit der Maschine, gegen das Ende der Bahn des auslaufenden Ballens geführt wird, mit diesem verklebt und dadurch den Bahnanfang des einzuwechselnden Ballens mit der auslaufenden Bahn in die Maschine einzieht. Zur Herstellung der erforderlichen Haftklebeflächen werden Haftklebebänder eingesetzt. Beim fliegenden Rollenwechsel sind es wahlweise beidseitig haftklebende Bänder, mit denen die Bahnen überlappend verklebt werden (Bahn über Bahn) oder häufig auch ausreichend breite einseitig haftklebrig ausgerüstete Splicebänder (Stoß an Stoß).

Das Prinzip hat sich seit Jahrzehnten in der Praxis bewährt, die technische Durchführung musste aber laufend an die gesteigerten Bahngeschwindigkeiten und Bahnbreiten der Maschinen angepasst werden. So wurden innerhalb dreier Jahrzehnte die Bahngeschwindigkeiten von ca. 600m/min auf heute bis zu 2500 m/min und die Maschinenbreiten von ca. 2 m auf heute ca. 8 m gesteigert. Die damit verbundenen höheren Krafteinwirkungen auf die Splice erfordern selbst bei etwas herabgesetzter Bahngeschwindigkeit während des Splicevorgangs eine Verbesserung der Klebemassen und eine sorgfältig ausgeklügelte Splice-Vorbereitung. Ein Maschinenstopp wegen Bahnabrisses bei derartigen Geschwindigkeiten und Bahnbreiten verursacht sehr hohe Verlustkosten (Ausfallzeit und Ausschuss während der Anfahrphase).

Besonders viel Zeit und Sorgfalt bei der Splice-Vorbereitung benötigt die Fixierung des Bahnanfangs am einzuwechselnden Ballen. Vor dem Splicen muss nämlich der neue Ballen auf eine Umfanggeschwindigkeit gebracht werden, die ungefähr der Bahngeschwindigkeit entspricht. Dabei muss der Bahnanfang, der die für das Splicen aufgebrachte Haftklebefläche trägt, durch Fixierhilfen fest auf der Oberfläche des Ballens haften. Bereits leichtes Flattern dieser Bahnoberfläche behindert bei den hohen Geschwindigkeiten ein vollflächiges Verkleben mit der auslaufenden Bahn und führt zum Abriss. Sofort nach Ausbildung der Verklebung hingegen müssen die Fixierhilfen gelöst werden, damit sich der Bahnanfang von der Ballenoberfläche trennen kann. Als solche Fixierhilfen werden z.B. haftklebende Papieretiketten benutzt, die durch Wahl des Papiers und/ oder mittels spezieller Geometrie eine mehr oder weniger definierte Reißfestigkeit besitzen und in bestimmter Anzahl von Hand so auf den Ballen geklebt werden, dass der Bahnanfang auf die darunter liegende Fläche der folgenden Windung fixiert wird. Unmittelbar nach dem Splicen der beiden Bahnen werden durch den Bahnzug die Fixierhilfen zerrissen.

Für eine zügige Splice-Vorbereitung und um die zeitraubende und nicht immer zuverlässige Fixierung von Hand zu vermeiden, sind haftklebende Splicebänder entwickelt worden, die neben den für das Splicen vorgesehenen Klebeflächen die Fixierhilfe für den Bahnanfang integriert enthalten. Diese Klebebänder besitzen, in Längsrichtung aufgeteilt, auf ihrem Trägermaterial zwei streifenartige Zonen, wobei die eine doppelseitig oder einseitig haftklebende Zone für den Splicevorgang ausgerüstet ist und auf (doppelseitig haftklebend) bzw. anteilig unter (einseitig haftklebend) den Bahnanfang des einzuwechselnden Ballens geklebt wird Die zweite ebenfalls haftklebrige Zone, die auf dem Klebeband mit mehr oder weniger Abstand neben der ersten Zone angeordnet ist, dient mit ihrer an der Unterseite des Klebebandes liegenden Klebefläche der Fixierung auf der folgenden Windung, die die Ballenoberfläche bildet.

In der WO 95/29115 wird ein Spliceband beschrieben, bei dem die integrierte Fixierhilfe mittels einer schwachklebenden, reversibel haftenden Klebemasse auf der Ballenoberfläche befestigt wird. Die reversibel haftende Beschichtung soll gewährleisten, dass beim Splicevorgang die Fixierung leicht und ohne haftklebende Rückstände auf der Ballenoberfläche zu hinterlassen gelöst wird. Diese Verfahrensweise hat sich in der Praxis nicht bewährt, da die Festigkeitswerte der reversiblen Verklebung von der Beschaffenheit der zu veredelnden Papiersorte abhängen und damit nicht konstant sind. Außerdem verbleibt die Haftklebefläche der Fixierhilfe unabgedeckt auf der Unterseite der Papierbahn und wird beim Veredelungsprozess über die heißen Trockenzylinder der Papiermaschine geführt, wobei haftklebende Partikel abgelagert werden, die das Papier verunreinigen, Trockenfilz- und Siebe verschmutzen und in größerer Ansammlung durch Ankleben der Bahn an Trockenzylindern Abrisse verursachen können.

In ähnlicher Weise wird in der DE 40 33 900 A die Bahnfixierung mit einer schwach haftklebenden Sektion in Verbindung mit der Splicezone durchgeführt.

In der EP 0 418 527 A wird ein Spliceverfahren speziell für einen fliegenden Ballenwechsel in einer Druckmaschine beschrieben. Hierbei wird die integrierte, haftklebend ausgerüstete Fixierhilfe durch eine eingebaute Sollbruchstelle nach der Verklebung der Bahnen von der Splice-Zone getrennt. Als Sollbruchstelle dient eine in Längsrichtung ausgeführte Perforierung des Trägermaterials im Klebeband zwischen den Haftkleberschichten für die Splice- und Fixier-Zone. Vorteilhaft ist bei diesem Verfahren, dass die haftklebenden Flächen nach dem Splicen von nichtklebenden Substraten abgedeckt bleiben und damit keine haftklebenden Oberflächen durch die Druckmaschine oder dergleichen geführt werden. Nachteilig hingegen ist die wenig definierte Bruchkraft der Sollbruchstelle in Form einer Perforation.. Die Festigkeitsschwankungen können hierbei erheblich sein. Außerdem erfolgt die Auftrennung über die einzelnen Perforierungen ruckartig nach Art eines Reißverschlusses. Wegen der dabei auftretenden einzelnen Zugkraftspitzen kann bereits bei wenigen Schwächungen einzelner Perforationszwischenräume der gesamte Verbund vorzeitig reißverschlussartig aufreißen. Für Druckmaschinen mit Bahngeschwindigkeiten um ca. 800 m/min mag dieses Prinzip hinreichen, bei den wesentlich schneller laufenden Papierveredelungsmaschinen sind verbesserte Problemlösungen wünschenswert.

In der US 5,702,555 A wird ein Verfahren zur definiert lösbaren Fixierung von Bahnenden auf Ballenoberflächen beschrieben, bei dem ein beidseitig haftklebendes Band verwendet wird, das zwischen den haftklebenden Beschichtungen einen leicht spaltbaren Papierträger enthält, der als Sollbruchzone dient. Beim Lösen der Fixierung verbleiben die Haftklebeschichten auf der Papierbahn, der zwischen ihnen positionierte Papierträger spaltet mehr oder weniger mittig auf und löst dadurch die Verklebung zwischen Bahnanfang und darunter liegender Windung. Die Haftklebeschichten bleiben hierbei durch die beiden bei der Spaltung entstandenen dünneren Papierbahnen abgedeckt, so dass keine haftklebenden Flächen durch die Maschine geführt werden.

In den Schriften DE 196 28 317 A und DE 196 32 689 A sind Haftklebebänder beschrieben, die speziell für den fliegenden Rollenwechsel in schnell laufenden Papiermaschinen konstruiert sind und besonders leicht spaltendes Papier als Zwischenträgermaterial für eine integrierte Fixierhilfe des Bahnanfangs enthalten.

In der WO 99/46196 wird u.a. ein repulpierbares Spliceband mit integrierter Fixierhilfe beschrieben, bei dem in die mehrlagige Fixierhilfe eine wasserlösliche Kunststoffschicht in Kontakt mit einer Trennschicht aus Silikon oder fluororganischen Verbindungen als Sollbruchstelle eingebaut ist. Die Spaltkraft wird über die Beschichtungsstärke und Trennqualität der Trennmittel eingestellt. Nachteilig ist bei dieser Fixierhilfe das unerwünschte Einbringen derartig stark wirksamer oberflächenaktiver Mittel in das Papierrecycling. Außerdem erfordert die Einstellung der Spaltkraft in den gewünschten engen Toleranzen mittels Änderungen in den minimalen Schichtstärken derartiger Trennmittel einen hohen technologischen Aufwand.

Die EP 1 076 026 A beschreibt die Verwendung einer Fixierhilfe an der Unterseite eines Splicebandes, wobei das Spliceband mittels der Fixierhilfe an der zweitobersten Bahn eines gewickelten Ballens angeklebt wird, und das Spliceband zugleich an den Anfang der obersten Bahn des gewickelten Ballens derart angeklebt wird, dass zumindest ein Teil der klebend ausgerüsteten Oberseite des Splicebandes, die der Fixierhilfe gegenüber liegt, für die verklebende Ankopplung an eine schnell laufende Bahn eines anderen, abrollenden Ballens offen liegt, wobei die Fixierhilfe an der Unterseite des Splicebandes angeklebt ist und aus einem Trägermaterial besteht, das aus zwei zusammenkaschierten flächigen Materialien gebildet ist, wobei die Kaschierung eine Sollbruchzone bildet, und wobei die Fixierhilfe auf ihrer Unterseite haftklebend ausgerüstet ist. Insbesondere werden als Binder modifizierte Stärken eingesetzt, die als trennwirksame Zusätze Talkum, Stearylderivate oder Dispersionen von polymeren Trennmitteln aufweisen.

Zusammenfassend wird ersichtlich, dass der fliegende Ballenwechsel an modernen Beschichtungsanlagen ein komplexer Vorgang ist, bei dem wegen der hohen Geschwindigkeiten und großen zu beschleunigenden Massen im Bereich von Tonnen bereits marginale Fehler oder Schwachstellen dieses Prozesses zu erheblichen Verlusten führen können. Üblicherweise werden in den Papierfabriken aus diesem Grunde Statistiken über die Versager-Quote beim Splicen geführt. Dementsprechend besteht ein Bedarf an weiteren Optimierungen. Wesentlich ist hierfür die Minimierung von Zugspannungspitzen während des Splicens. Deshalb sind momentane, ruckartige Beschleunigungskräfte möglichst zu vermeiden. Problematisch ist dieses beim schlagartigen Lösen der Fixierhilfen für den Bahnanfang während der Spliceformung. Die Auftrennung der Fixierhilfen, die den Bahnanfang am einzuwechselnden Ballen gegen das Unterströmen von Luft oder fahnenartiges Ablösen beim Drehbeschleunigen auf Bahngeschwindigkeit mit verhältnismäßig hohen Haltekräften sichern müssen, erzeugt eine deutliche Spannungsspitze in der Papierbahn.

### Aufgabe der Erfindung ist es, diese Spannungsspitzen durch eine weiterentwickelte Vorgehensweise zu minimieren

### Beschreibung der Erfindung

Die Erfindung lehrt eine neuartige Kaschiermasse zur Herstellung einer Fixierhilfe, eine derart hergestellte Fixierhilfe in Form eines oder als Teil eines Klebebandes (Splice-Klebeband), insbesondere Haftklebebandes sowie die Verwendung einer Fixierhilfe bzw. eines Splice-Klebebandes für die Durchführung fliegender Rollenwechsel mit integrierter Fixierhilfe für den Bahnanfang des einzuwechselnden Ballens, wobei die geschilderten Mängel nicht oder zumindest nicht in dem Maße eintreten. Wesentlich ist hierzu der Einbau einer leicht und "soft" spaltbaren Sollbruchzone mit engen Bruchtoleranzen zur Ablösung der Fixierhilfe von der Ballenoberfläche.

Gegenstand der Erfindung ist daher unter anderem ein Klebeband, umfassend einen Träger aus einem Verbund zweier Bahnen, die mittels einer Kaschiermasse auf Basis zumindest einer Polysaccharidkomponente und einer Tensidkomponente zusammenkaschiert sind, weiterhin umfassend zumindest zwei Klebemassenschichten, von denen eine oberhalb des Trägers und die andere unterhalb des Trägers vorgesehen ist.

Dieses Klebeband kann sowohl lediglich die beschriebene Fixierhilfe sein oder insbesondere ein Splice-Klebeband umfassend eine derartige Fixierhilfe und weitere Komponenten.

Zur Herstellung der erfindungsgemäßen Fixierhilfe werden zwei Bahnen, insbesondere zwei Papierbahnen miteinander kaschiert. Die Kaschierung wird hierbei so ausgeführt, dass sie die gewünschte Sollbruchzone ergibt.
Als Kaschiermasse wird erfindungsgemäß eine solche Masse eingesetzt, die neben einem Bindemittel, insbesondere einer Polysaccharidkomponente, zumindest eine Tensidkomponente umfasst, die insbesondere als Trennmittel dient. Die Tensidkomponente kann ein einziges Tensid sein, es kann aber auch eine Tensidkomponente aus zwei oder mehreren Tensiden eingesetzt werden.
Die Kaschierklebemasse kann bei Bedarf vorteilhaft weitere Komponenten, wie insbesondere auch elastifizierende Zusätze (im Folgenden auch Elastifiziermittel) umfassen.
Die Polysaccharidkomponente ist in einer sehr bevorzugten Vorgehensweise Stärke, Gummi Arabicum oder Derivate der vorgenannten Verbindungen.
Die Bindemittelkomponente kann weiterhin auch beispielsweise ein Stearat, insbesondere Magnesium- und Kalziumstearat, sein. Die Bindemittelkomponente kann auch derart zusammengesetzt sein, dass eine Mischung aus Stärke mit einem oder mehreren weiteren Bindemitteln eingesetzt wird.
Stärke weist als Bindemittel den wesentlichen Vorteil auf, dass die Kaschiermasse eine sehr gute Siebdruckfähigkeit besitzt.

Erfindungsgemäß besonders bevorzugte Kaschiermassen haben einen Polysaccharidanteil von bis zu 98 Gew.-%, besonders bevorzugt von bis zu 85 bis 95 Gew.-%, noch besser von 90 bis 95 Gew.-%. Besonders bevorzugt lassen sich Stärkederivate einsetzen, insbesondere Hydroxypropylether auf Basis von Kartoffelstärke. Eine solche Stärke ist beispielsweise erhältlich von der Firma Emslandstärke unter der Bezeichnung Emsol K55.
Der Tensidgehalt beträgt sehr bevorzugt 2 bis 20, besser 5 bis 15, am besten 5 bis 10 Gew.-%. Die vorstehenden Anteilsangaben beziehen sich sowohl für die Polysaccharidkomponente als auch für die Tensidkomponente auf die Mischung aus Tensid und Polysaccharid, und zwar jeweils in Form der auf den Feststoffanteil bezogenen Menge. Zur Herstellung der Kaschiermasse ist noch Lösungsmittel, insbesondere Wasser, zugegen, bevorzugt in Anteilen von 50 bis 80 %. Insbesondere kann man zur Herstellung der Kaschierklebemassen vorgehen, indem man das feste Tensid in eine 20 bis 40 %ige wässrige Lösung der Polysaccharidkomponente gibt.

Als weitere Additive zu der Kaschiermasse können beispielsweise Talkum, Ca-Stearat und/oder trennwirksame Copolymere mit Stearylgruppen in Anteilen von 30 - 80 Gew. % verwendet. Talkum kann insbesondere als Füllmittel eingesetzt werden, um die Siebdruckfähigkeit einzustellen!

Zur Elastifizierung haben sich Polypropylen- oder Polyethylenglykole vorzugsweise in Mengen zwischen 0 - 15 Gew.% als gut geeignet erwiesen. Dabei werden die höher molekularen, bei Raumtemperatur festen Produkte vorrangig verwendet. Weitere in größeren Anteilen gut einsetzbare Elastifizierungsmittel sind Gummi Arabicum und Kunststoffe mit ähnlichem Eigenschaftsprofil.

Die Kaschiermasse wird bevorzugt mit einem für wässrige Dispersionen geeigneten Auftragswerk auf einen Papierträger oder dergleichen beschichtet und in nassem Zustand mit einem zweiten Papierträger oder dergleichen eingedeckt und anschließend getrocknet. Bei Bedarf können die in der Papierherstellung üblichen Maßnahmen wie Rückbefeuchtung, Glättung und Egalisierung des erzeugten Verbunds eingesetzt werden. Die Schichtstärke der Kaschiermasse liegt nach dem Trocknen vorzugsweise in einem Bereich von 5 bis 20 g/m², insbesondere 5 bis 10 g/m².

Der vorstehend beschriebene Verbund kann dann mit Klebemasse, insbesondere Haftklebemasse beschichtet werden. Dabei können je nach Anwendungserfordernis auf der Ober- und auf der Unterseite dieselbe, aber auch unterschiedliche Klebemassen bzw. Haftklebemassen aufgetragen werden. Die derart hergestellte Fixierhilfe kann in dieser Form zur Anwendung für den fliegenden Rollenwechsel kommen, die Fixierhilfe kann aber auch als Komponente für die Ausrüstung eines umfassenderen Klebebandes (auch als Splice-Klebeband bezeichnet), insbesondere Haftklebebandes, dienen. Hierbei ist eine Vielzahl von Ausführungsformen möglich, und es können mit Einbeziehung von Trennpapieren Rollenware von Klebebändern mit einseitig haftklebend ausgerüsteten Spliceverklebungszonen oder beidseitig haftklebend ausgerüsteten Spliceverklebungszonen hergestellt werden
In einer ersten Ausführung besteht die Fixierhilfe aus einem Träger mit Sollbruchstelle der vorstehend beschriebenen Art, also insbesondere zweier miteinander kaschierter Papierbahnen, wobei der Träger auf seiner Ober- und auf seiner Unterseite jeweils mit einer Klebemasse ausgestattet ist, wobei insbesondere Haftklebemassen eingesetzt werden. Dabei können auf der Ober- und auf der Unterseite identische (Haft-)Klebemassen verwendet werden, die (Haft-)Klebemassen können aber auch unterschiedlich gewählt werden, insbesondere indem sie auf das Substrat angepasst sind, auf dem sie während der Anwendung verklebt werden.
Eine weitere Ausführungsform stellt ein Klebeband dar, welches insbesondere eine Fixierhilfe mit dem vorstehend beschriebenen Aufbau einschließt. Dabei wird die Fixierhilfe auf der Gegenseite der für das Splicen vorgesehenen Haftklebezone vorgesehen, insbesondere wie in DE 196 28 317 A1 beschrieben, vorzugsweise wie dort in Fig. 1 beschrieben. Weitere Beispiele für Klebebänder mit einer integrierten Fixierhilfe, die erfindungsgemäß ausgestaltet werden kann, finden sich in den Schriften DE 196 28 317 A, DE 198 30 674 A, DE 199 02 179 A, DE 199 58 223 A, DE 100 58 956, DE 101 23 981, WO 03/20623 A, WO 03/24850 A, DE 102 10 192 A, DE 102 58 667, DE 10 2004 028 312 A, DE 10 2005 051 181 A, wobei die Erfindung naturgemäß nicht auf diese Ausführungsformen beschränkt werden soll.

Die Fixierhilfe bzw. das Splice-Klebeband mit Fixierhilfe kann zur besseren Handhabung insbesondere mit einem beidseitig trennenden Trägermaterial, insbesondere silikonisiertem Papier, eingedeckt sein und ist vorteilhaft zur Lagerung oder zum Verkauf mit diesem zur Rolle gewickelt.

Besonders bevorzugt ist die Fixierhilfe und/oder das Splice-Klebeband elastisch ausgebildet.

Bei der Auswahl geeigneter Kaschiermassen ist darauf zu achten, dass die getrockneten Filme auch bei höheren Temperaturen keine Haftkraft besitzen, damit die nach der Spaltung freigelegten Flächen keine Maschinenteile oder Produktionsware verschmutzen. Für den Einsatz in Papier- und Druckmaschinen ist es wünschenswert, dass alle Bestandteile der Fixierhilfe bzw. des Splice-Klebebandes das Recycling von Papieren nicht stören. Bei der Weiterverarbeitung herausgeschnittene Splicezonen können dann problemlos recycliert werden. Daher sind wasserbasierte Zusammensetzungen der Kaschiermasse, die bei der Papierherstellung übliche Hilfsstoffe enthalten, besonders vorteilhaft. Als Binder können z.B. modifizierte Stärken verwendet werden, oder Bindemittel wie sie für Nassklebbänder seit langem in Gebrauch sind.
Als Trennmittel werden Tenside eingesetzt. Insbesondere bevorzugt werden nichtionische und/oder anionische Emulgatoren ausgewählt. Die Tenside können dabei monomerer, oligomerer oder auch polymerer Natur sein. Eingesetzt werden bevorzugt Tenside mit langen Seitenketten, insbesondere mit Seitenketten mit 8 bis 18 C-Atomen. Als besonders bevorzugt haben sich polare Tenside mit längerkettigen Alkylresten herausgestellt, insbesondere solche Tenside mit Alkylketten mit mindestens 8, besser mit mindestens 12 C-Atomen.

Die folgenden Verbindungen haben sich als insbesondere vorteilhaft als Trennmittel für die vorliegende Erfindung herausgestellt:
Natrium-Octadecylsulfosuccinat, Natrium-Dialkylsulfosuccinat, Na-n-Dodecylsulfat, Natrium-Laurylsulfat, Ammonium-Laurylsulfat, Natrium-Oleylcetylalkoholsulfat, Fettalkoholpolyglycolether, Fettalkoholethoxylat, Nonylphenolethoxylat.

Als besonders hervorragend hat sich Dinatrium-n-octadecylsulfosuccinat (ODSS) als Trennmittel im erfinderischen Sinne herausgestellt. Bei Verwendung einer Kaschiermasse auf dieser Basis ließen sich für einen fliegenden Rollenwechsel besonders erfolgreich (fehlerfrei) einsetzbare Klebebänder herstellen.

Die folgende Übersicht gibt eine Liste kommerziell erhältlicher Produkte wieder, die sich zur Herstellung der erfindungsgemäßen Kaschiermasse hervorragend einsetzen lassen. Auf die Kennzeichnung als Handelsmarke wurde unbeschadet der jeweiligen Inhaberrechte verzichtet.

| **Handelsname** | **Hersteller** | **Chemische Charakterisierung** | **Hersteller-Angaben** | |
|---|---|---|---|---|
| ODSS, Aerosol 18P | Cytec | Na-Octadecylsulfosuccinat | | anionisch |
| Disponil SUS IC 680 | Cognis | Dialkylsulfosuccinat, Na-Salz | k.A. | anionisch |
| Texapon K12 PA 1 | Cognis | Na-n-Dodecylsulfat | C12 | anionisch |
| Sulfopon 101 sp. RHD | Cognis | Na-Laurylsulfat | C12/C16 | anionisch |
| Texapon A | Cognis | NH₄-Laurylsulfat | C8/C14 | anionisch |
| Sulfopon 0680 | Cognis | Oleylcetylalkoholsulfat, Na-Salz | k.A. | anionisch |
| Disponil LS 500 | Cognis | Fettalkoholpolyglykolether | C12/C14 | nichtionisch |
| Disponil TA 11 | Cognis | Fettalkoholethoxylat | C16/C18 | nichtionisch |
| Disponil NP 10 | Cognis | Nonylphenolethoxylat | k.A. | nichtionisch |

Eine weitere bevorzugte Variante zur Erzeugung der gewünschten Sollbruchzone besteht in der partiellen nicht vollflächigen Kaschierung zweier Trägerbahnen. Hierzu wird z.B. eine Papierbahn mittels Rotationssiebdruck mit diskreten Arealen von Kaschiermasse beschichtet und nass mit der zweiten Trägerbahn zusammenkaschiert und getrocknet. Abstand und Durchmesser sowie Schichtdicke der Areale werden durch das Siebdesign vorgegeben. Bevorzugt werden Siebe mit 14 bis 100 mesh und 7 % bis 60 % Durchlass verwendet. Als hervorragend haben sich beispielsweise Siebe mit 40 und Siebe mit 50 mesh herausgestellt. Die Beschichtungsmenge an getrockneter Kaschiermasse wird im Bereich 5 bis 25 g/m² eingestellt, insbesondere 5 bis 10 g/m².

Für den Siebdruck werden höher viskose pastenartige, nicht schäumende wässrige Zubereitungen verwendet, deren Feststoffgehalt z. B. aus anionischer Kartoffelstärke oder Maisstärke besteht. Elastifizierende Zusätze wie Polypropylen- oder Polyethylenglykole und/ oder Trennmittel können in Mengen, die mit dem Hauptbestandteil verträglich sind, mit verwendet werden. Die Einstellung der Spaltkraft wird neben dem Anteil an Trennmittel durch Siebdesign und Feststoffkonzentration vorgegeben.

Zur Erzielung eines sauberen, nicht verschmierten Druckbildes muss der elastische Anteil im Fließverhalten der wässrigen Zubereitung gering gehalten werden, damit ein Fadenziehen vermieden wird. Dies kann z.B. durch Zusätze von Talkum oder geringen Mengen feinstteiligem Kieselgel oder anderen Verdickern erreicht werden.

Durch eine unterschiedliche Verteilung und/oder Größe der Kaschiermassen-Areale in der Sollbruchzone können innerhalb dieser Zone variierende Spaltkräfte eingestellt werden. Beim Spalten der Fixierhilfe während des Splicevorgangs kann dadurch die Spaltkraft z.B. zu Beginn im Randbereich der Fixierzone niedrig gehalten werde, beim Fortschreiten des Ablösevorgangs zur Mitte hin durch eine anwachsende Dichte oder Größe von Haftstellen stetig anwachsen und gegen Ende der Spaltung durch entsprechende Verringerung der Haftpunkte wieder abfallen. Auf diese Weise lassen sich Zugspannungsspitzen beim Splicevorgang vermeiden und die Spaltkräfte der Fixierhilfen können definiert auf die Erfordernisse verschiedenster Papierqualitäten und Splicegeometrien eingestellt werden.

Bei der Auswahl der Trägerpapiere bzw. Folien ist zu berücksichtigen, dass für einen störungsfreien Veredelungsprozess die Dicke der Splice möglichst gering ausfallen soll. Deshalb ist die max. Stärke, insbesondere Papierstärke der einzelnen Trägerbahnen vorzugsweise auf 70 g/m² zu beschränken, und die Gesamtstärke des Verbundes für die Fixierhilfe soll max. 140 g/m² nicht überschreiten. Zur Reduzierung der Dicke des Verbundes kann auf eine stärkere, nass beschichtete Träger-Bahn auch eine dünnere Papierbahn aufkaschiert werden. Eine nassfeste Ausrüstung der verwendeten Papierbahnen ist zur Vermeidung von Verspannungen zulässig, sollte aber insbesondere in einer Weise ausgeführt sein, die eine ausreichende Repulpierbarkeit unter Betriebsbedingungen noch zulässt.

Falls bei sehr dünnen Papieren eine Nasskaschierung nicht möglich ist, können auch Schmelzkleber verwendet werden, vorzugsweise repulpierbare Materialen auf Basis Polyvinylpyrrolidon und/oder entsprechender Copolymere oder Hydroxypropylcellulose, die mit polaren Wachsen, Harzen und Trennwachsen wie z.B. Stearinsäure und bei Bedarf mit vorzugsweise wasserlöslichen Weichmachern abgemischt sind. Nachdem eine der Papierträgerbahnen mit einem derartigen Schmelzkleber beschichtet wurde, wird die zweite Bahn thermisch aufkaschiert. Die Schmelzkleber sollten möglichst hohe Erweichungsbereiche oberhalb 120°C haben, damit bei Kontakt mit heißen Trockenzylindern in der Papiermaschine möglichst keine Schmelzkleber-Partikel ("Stickies") auf diesen Flächen abgelagert werden. Da Schmelzkleber bei der Papierherstellung als potentielle Störstoffe eingestuft sind, wird diese Variante der Kaschierung nicht bevorzugt eingesetzt.

Die zusammenkaschierte Trägerbahn wird anschließend mit einer scherfesten, und vorzugsweise repulpierbaren Haftklebemasse mit Schichtstärken von bevorzugt je 15- 40 g/m² beidseitig ausgerüstet und in Bahnbreiten von etwa 100 - ca. 400 mm Breite aufgeschnitten und mittels Einschießen eines beidseitig trennenden Trägermaterials, z.B. silikonisiertem Papier, zu Rollen gewickelt. Die so erhaltenen Fixierhilfen können danach auf die verschiedensten Splicebänder aufgeklebt werden. In der DE 196 28 317 A1 wird hierfür ein Beispiel mit einem einseitig haftklebrig ausgerüsteten Spliceband beschrieben. Eine Verankerung der Fixierhilfe auf dem Splice-Haftklebeband ist z.B. auch mit einer nur einseitig haftklebrig beschichteten Fixierhilfe möglich. Die Verklebung kann dann z.B. mit einem Leimstrich erfolgen. Die so mit der integrierten Fixierhilfe ausgerüsteten Splicebänder können in üblicher Weise z.B. mit eingeschossenem Trennpapier als Rollenware bereitgestellt werden.

Die Sollbruchzone wird in der Regel als Adhäsionsbruch zwischen der Kaschiermasse und der aufkaschierten Papierbahn wirksam. Die Trennkraft zur Spaltung der Sollbruchzone soll beim Aufspalten der Fixierhilfe, wobei die Spalthälften beide unter einem Winkel von 90° zum Kaschierverbund mit einer Geschwindigkeit von 300 mm/min getrennt werden, vorzugsweise in einem Bereich von 3 bis 40, insbesondere 5 bis 35 cN/cm eingestellt sein. Die leichter spaltbaren Verbunde sind vorrangig für das Splicen empfindlicher oder leichter Papiere vorgesehen. Für besondere Anwendungsfälle können die oben genannten Grenzen natürlich auch überschritten werden.

In Anwendungsfällen, bei denen die Repulpierbarkeit der Splicezonen nicht gefordert wird, kann die Problemlösung entsprechend vereinfacht werden. Dann können als Trägermaterialien für die Fixierhilfe auch Folien zusammenkaschiert werden, wobei als Kaschiermasse Schmelzkleber mit trennwirksamen Zusätzen, wie z.B. Trennwachsen auf Basis von Polyvinylstearylcarbamat oder Talkum etc. in Abmischgrenzen, wie sie oben genannt wurden, eingesetzt werden. Auch Bindemittel in Form von wässrigen Dispersionen z.B. auf Basis Polyacrylat oder Poly- Butadien /Styrol mit wassermischbaren Trennmittelzusätzen sind dann geeignet.

Nachfolgend wird die Erfindung an Hand von Beispielen erläutert, ohne sie dadurch aber unnötig einschränken zu wollen.

### Versuchsreihe 1 (Tabelle 1)

Es wird eine Kaschiermasse aus einer wässrigen Lösung des Polysaccharids und dem entsprechenden Tensid in den in Tabelle 1 angegebenen Anteilen hergestellt. Das Bindemittel wird in Form einer wässrigen Polysaccharid-Lösung eingesetzt, die man erhält, indem man das Stärkederivat bei 80 bis 85 °C zu einer homogenen Lösung mit der entsprechenden Menge Feststoff löst (B1 bis B9) [Emsol K 55 wurde insbesondere als 35%ige Lösung (B1, B2), Emcol DA 1344 als 30 %ige Lösung (B3) und als 25 %ige Lösung (B4 bis B6) eingesetzt. Gummi Arabicum wurde als 60 %ige Lösung eingesetzt]. Als Vergleichsversuche (V1 bis V4) wird eine Kaschiermasse aus einem polymeren Trennmittel ("Tremul") und Stärke hergestellt. Das polymere Trennmittel (Tremul) erhält man wie folgt: Styrol und Maleinsäure-mono-N-stearylamid werden im Molverhältnis 3 zu 1 radikalisch bei 85 °C in ammoniakalisch, wässrigem Medium bei pH 9 ohne Zusatz von Emulgatoren zu einer Polymerdispersion mit 30 Gew. % Feststoff copolymerisiert.

Zur Herstellung des Binders wird das Polysaccharidderivat bei 80 bis 85 °C in Wasser zu einer homogenen Lösung mit dem in der Tabelle 1 angegebenen Feststoffgehalt gelöst.

Als Polysaccharidderivat werden die Stärkederivate Emsol K55 (Modifizierte, heißwasserlösliche Hydroxypropylether auf Basis von Kartoffelstärke) sowie Emcol DA1344 (hydroxypropylierte Kartoffelstärke mit einem Amylaseanteil von ca. 22 %), beide erhältlich von der Firma Emslandstärke GmbH, sowie Gummi Arabicum eingesetzt.

Auf einen Papierträger mit einem Flächengewicht von 60g/m² (DREWSEN Spezialpapiere GmbH & Co. KG) wird die wie vorstehend beschrieben hergestellte Kaschiermasse (Beispiele B1 bis B10, Vergleichsbeispiele V1 bis V4) im Rotations-Siebdruckverfahren (Siebtyp LR, 40Mesh, 20% Open area, 125µ Thickness, 300y Hole diameter, 25% Paste Volume) aufgetragen. Auf die nasse Beschichtung wird ein Seidenpapier mit 30 g/m² Flächengewicht aufkaschiert. Danach wird der Verbund bei 120 °C getrocknet und mittels Nachbefeuchtung geglättet. Die Schichtstärke der getrockneten Kaschiermasse ist jeweils in der Tabelle 1 angegeben (Zeile Masseauftrag in g/m²).

Anschließend wird der Verbund mit je 20 g/m² repulpierbarer Haftklebemasse beidseitig beschichtet.
Zwei Papiere werden von beiden Seiten gegenüberliegend auf das zu prüfende Muster aufgelegt und leicht mit dem Finger angestrichen, um Lufteinschlüsse zu vermeiden. Danach wird mit dem Handroller je Seite zweimal zügig über den Verbund gerollt, um eine einwandfreie Verklebungsfestigkeit zu erreichen.
Die Verklebung ist so herzustellen, dass auf einer Seite die Enden der Papiere über den Prüfkörper herausragen und so als Anfasser dienen können.
Mit dem Stahllineal werden mittig des Verbundes 15 mm Breite Streifen in einer Länge von ca. 20 cm herausgeschnitten. Sodann werden die beiden Anfasser per Hand auseinander gezogen, bis ein Spalten des Papierprüflings erkennbar ist.
Dann wird der Prüfkörper an den Anfassern in die Zugprüfmaschine eingespannt und der Rest des Streifens unter konstanter Geschwindigkeit bei 300 mm/min auseinander gezogen.
Es ist darauf zu achten, dass das Ergebnis nicht dadurch verfälscht wird, dass die gegenüberliegenden Kanten des Klebebandes am Rand des Prüfkörpers Kontakt haben und verkleben.

Die Spaltfestigkeit des Papiers wird in cN/cm angegeben. Aus 5 ermittelten Werten wird der Mittelwert angegeben.

Die Prüfung der Spaltkraft in einer Zugprüfmaschine bei einer Spaltgeschwindigkeit von 300 mm/ min ergibt die in der Tabelle1 aufgeführten Werte.

**Tabelle 1**

| **Komponente** | | **V1** | **V2** | **V3** | **V4** | **B1** | **B2** | **B3** | **B4** | **B5** | **B6** | **B7** | **B8** | **B9** |
|---|---|---|---|---|---|---|---|---|---|---|---|---|---|---|
| Emsol K55 | Gew.-% (fest) | 53 | - | - | - | 92,5 | 90 | - | - | - | - | - | - | - |
| Emcol DA1344 | Gew.-% (fest) | - | - | - | - | - | - | 95 | 92,5 | 90 | 85 | - | - | - |
| Gummi arabicum | Gew.-% (fest) | - | 50 | 53 | 60 | - | - | - | - | - | | 95 | 92,5 | 90 |
| Tremul z. Vergl. | Gew.-% (fest) | 47 | 50 | 47 | 40 | - | - | - | - | - | - | - | - | - |
| ODSS, Aerosol 18P | Gew.-% (fest) | - | - | - | - | 7,5 | 10 | 5 | 7,5 | 10 | 15 | 5 | 7,5 | 10 |
| Siebdruckfähigkeit* | | sehr gut | gut | gut | gut | sehr gut | sehr gut | schleimig, Zipfelmützenbildung, | | | | mäßig, Zipfelmützenbildg., Viskosität gering | | |
| Masse-auftrag | g/m² | 10,0 | 12,3 | 11,6 | 10,2 | 10,1 | 9,8 | 5,0 | 7,7 | 8,9 | 6,0 | 15,4 | 15,5 | 16,1 |
| Spaltkräfte (Trennkräfte) | cN/cm | 11,2 | 3,3/2,8 | 3,2/3,3 | 3,3/8,6 | 30-50 | 20 | 10 | 61 / 56 | 38 / 42 | 47 / 51 | 4,5 / 4,5 | 8,3 / 0,2 | 2,2 / 2,9 |
| ∅ | cN/cm | 12,3 | 2,9 | 3,2 | 5,9 | 30 | 20 | 10 | 59 | 40 | 50 | 4,5 | 4,2 | 2,6 |
| Spaltkräfte (Trennkräfte) | cN/cm | 10-16 | 3,8/4,4 | 4,2/7,4 | 3,4 / 10,2 | 17-26 | 30-37 | 10-20 | 36 / 39 | 49 / 47 | 37 / 40 | 6,2 / 15,8 | 7,3 / 13,1 | 7,4 / 12,0 |
| ∅ | cN/cm | 13,0 | 4,1 | 5,8 | 6,0 | 21 | 31 | 10 | 37 | 48 | 38 | 11 | 10 | 10 |

| | | | | | | | | | | | | | | |
|---|---|---|---|---|---|---|---|---|---|---|---|---|---|---|
| * Siebdruckfähigkeit; Die optische Beurteilung bezieht sich auf das subjektive Erscheinungsbild | | | | | | | | | | | | | | |

Hervorragende Ergebnisse erzielt man, wenn man eine Kaschiermasse mit 90 bis 95 Gew.-% eines heißwasserlösliche Hydroxypropylether auf Basis von Kartoffelstärke (hier beispielhaft Emsol K55) als Binderkomponente und 5 bis 10 Gew.-% Dinatrium-n-octadecylsulfosuccinat (ODSS) als Tensidkomponente einsetzt.

### Versuchsreihe 2 (Tabelle 2)

In einer zweiten Versuchsreihe werden analog der in Versuchsreihe 1 beschrieben Herstellungsweise Kaschiermassen aus 90 % des Stärkederivats und 10 % Tensid (bezogen auf die Feststoffgehalte; Kaschiermasse erhältlich aus Zugabe des festen Tensids in eine 35%ige wässrige Lösung des Stärkederivates) vermessen. Die Prüfmusterherstellung erfolgt ebenfalls analog zu der Versuchsreihe 1.
Als Polysaccharidkomponente werden die Stärkederivate Emsol K55 (Emslandstärke, s.o.) sowie Pure-FLO F (modifizierte Speisestärke auf Basis von amylosefreiem, amylopectinhaltigem Mais ["waxy maize";]; erhältlich von National Starch & Chemical Corporation) eingesetzt.
Die eingesetzten Tenside sind der Tabelle 2 entnehmbar.
Tabelle 2 zeigt, dass die aufgeführten Tenside ebenfalls zur Herstellung der Kaschiermasse gut geeignet sind.

**Tabelle 2**

| Rezepturen: 90%Stärke +10% Tensid (fest/fest) | | | | | |
|---|---|---|---|---|---|
| Siebdruck 40Mesh auf 60g-Drewsen Papier, Nasskaschierung mit 30g-Seidenpapier, Trocknung: 5 min bei 80 °C | | | | | |
| **Beispiel** | **Stärke** | **Tensid** | **Viskosität** | **Masseauftrag [g/m²]** | **Optische Beurteilung *** |
| B11 | Emsol K55 | ODSS | siebdruckfähig | 9,8 | sehr gut |
| B12 | Emsol K55 | Texapon K12 | siebdruckfähig | 7,4 | gut |
| B13 | Emsol K55 | Sulfopon 101 | siebdruckfähig | 10,3 | gut |
| B14 | Emsol K55 | Texapon A | siebdruckfähig | 10,1 | gut |
| B15 | Emsol K55 | Sulfopon 0680 | siebdruckfähig | 6,3 | gut |
| B16 | Emsol K55 | Disponil LS500 | Viskosität etw. niedrig | 7,1 | gut |
| B17 | Emsol K55 | Disponil TA11 | siebdruckfähig | 9,2 | gut |
| B18 | Pure-FLO F | Disponil SUS IC 680 | siebdruckfähig | 3,5 | gut |
| B19 | Pure-FLO F | ODSS | siebdruckfähig | 3,8 | sehr gut |
| B20 | Pure-FLO F | Disponil TA11 | siebdruckfähig | 3,9 | gut |

| | | | | | |
|---|---|---|---|---|---|
| * Siebdruckfähigkeit; Die optische Beurteilung bezieht sich auf das subjektive Erscheinungsbild | | | | | |

Die in den Tabellen 1 und 2 wiedergegebenen Ergebnisse belegen, dass es mit der vorgeschlagenen Erfindung gelungen ist, gegenüber dem Stand der Technik eine Minimierung bezüglich der Belastung des sich in unmittelbarer Nähe des Bahnanfangs formenden Splices zu gewährleisten und eine Verringerung des Auf- oder Einreißens der Papieroberfläche, auf der die Fixierhilfe befestigt ist, zu bewirken. Besonders bei der Fertigung dünnerer, empfindlicher Papiere müssen die Spannungsspitzen möglichst gering gehalten werden, wobei andererseits die zuverlässige Fixierung des Bahnanfangs auf dem Ballen weiterhin verhältnismäßig hohe Festigkeiten erfordert. Wegen dieser Anforderungen muss die Sollbruchstelle in möglichst engen, definierten Toleranzen funktionstüchtig gestaltet werden.

Wie in der Einleitung beschrieben, ist die Erzeugung von Sollbruchstellen mittels mehr oder weniger leicht spaltbarer Papiere, deren Spaltfestigkeit im wesentlichen durch einen hohen Anteil an Kurzfasern und Füllstoffen herabgesetzt ist, günstiger zu bewerten als die Verwendung von reversibel klebenden Haftklebebeschichtungen. Nachteilig ist bei der Papierspaltung in der Dicke des Papiers (Z-Richtung), dass eine niedrige Spaltkraft schwierig einzustellen ist und nicht in engen Grenzen festgelegt werden kann. Dementsprechend gelingt eine enge Auslegung der Sollbruchtoleranzen nicht. Außerdem ist Papier, das zur Verringerung der Spaltfestigkeit in Z-Richtung einen hohen Anteil an Füllstoff und Kurzfasern enthält, sehr spröde. Dies führt zu einer spröden, unelastischen und ruckartigen Spaltung, so dass derartige Sollbruchstellen nicht elastisch "soft" spalten und keinen Beitrag zu einem Abbau von momentanen Belastungsspitzen im Splicevorgang liefern.

## Patentansprüche

1. Kaschiermasse zur Herstellung eines Klebebandes mit einem flächigen Träger, umfassend zumindest eine Polysaccharidkomponente und eine Tensidkomponente.

2. Kaschiermasse nach Anspruch 1 , **dadurch gekennzeichnet, dass** die Polysaccharidkomponente in einem Anteil bis zu 98 Gew.-%, besonders bevorzugt von 85 bis 95 Gew.-%, noch besser von 90 bis 95 Gew.-%, bezogen auf das Gesamtgewicht aus Polysacchariden und Tensiden, vorliegt.

3. Kaschiermasse nach einem der vorangehenden Ansprüche, **dadurch gekennzeichnet, dass**
als Polysaccharidkomponente Stärkederivate eingesetzt werden, insbesondere Hydroxypropylether auf Basis von Kartoffelstärke.

4. Kaschiermasse nach einem der vorangehenden Ansprüche, **dadurch gekennzeichnet, dass**
der Tensidgehalt 2 bis 20 Gew.-%, besser 5 bis 15 Gew.-%, noch besser 5 bis 10 Gew.-% beträgt, bezogen auf das Gesamtgewicht aus Polysacchariden und Tensiden.

5. Kaschiermasse nach einem der vorangehenden Ansprüche, **dadurch gekennzeichnet, dass** als Tensidkomponete Di-Natrium-n-Octadecylsulfosuccinat, Natrium-Dialkylsulfosuccinat, Na-n-Dodecylsulfat, Natrium-Laurylsulfat, Ammonium-Laurylsulfat, Natrium-Oleylcetylalkoholsulfat, Fettalkoholpolyglycol-ether, Fettalkoholethoxylat, Nonylphenolethoxylat gewählt werden.

6. Kaschiermasse nach einem der vorangehenden Ansprüche, **dadurch gekennzeichnet, dass**
sie im getrockneten Zustand keine Haftkraft besitzt.

7. Klebeband, umfassend einen Träger aus einem Verbund zweier Bahnen, die mittels einer Kaschiermasse nach einem der vorangehenden Ansprüche zusammenkaschiert sind, weiterhin umfassend zumindest zwei Klebemassenschichten, von denen eine oberhalb des Trägers und die andere unterhalb des Trägers vorgesehen ist.

8. Klebeband nach Anspruch 7, **dadurch gekennzeichnet, dass** die Trennkraft zur Spaltung der Sollbruchzone beim Aufspalten der zusammenkaschierten Bahnen des Klebebandes 3 bis 40 cN/cm beträgt, gemessen bei einer Trennung der Spalthälften unter einem Winkel von 90° zum Kaschierverbund mit einer Geschwindigkeit von 300 mm/min.

9. Klebeband nach einem der Ansprüche 7 oder 8, **dadurch gekennzeichnet, dass** die Trennkraft zur Spaltung der Sollbruchzone durch eine vollflächige Kaschierung oder eine partielle , diskontinuierliche Beschichtung der Kaschiermasse durch Anzahl und/oder Größe von haftenden Arealen, wie sie mittels Siebdruck oder Tiefdruck erzeugt werden können, eingestellt wird.

10. Klebeband nach einem der Ansprüche 7 bis 9, **dadurch gekennzeichnet dass** die Materialien der zusammenkaschierten Bahnen des Klebebandes Folien oder insbesondere Papier sind, insbesondere Papier mit einem Flächengewicht von 10 bis 70 g/m².
